# FASCICULE DE BREVET EUROPEEN

(11) **EP 1 951 974 B1**
(45) Date de publication et mention de la délivrance du brevet: **03.08.2016**
(21) Numéro de dépôt: 06831153.9
(22) Date de dépôt: 20.11.2006
(51) Int. Cl.: E05B 39/00, G09F 3/03, G06K 19/06, E05B 73/00

(54) **SCELLE DE HAUTE SECURITE INVIOLABLE ET REUTILISABLE**
UNVERLETZLICHES UND WIEDERVERWERTBARES HOCHSICHERHEITSSIEGEL
TAMPER-PROOF AND REUSABLE HIGH SECURITY SEAL

(30) Priorité: 23.11.2005 FR 0511835
(43) Date de publication de la demande: 06.08.2008
(73) Titulaire: Novatec SA, 82000 Montauban (FR)
(72) Inventeur: BOURRIERES, Francis, F-82000 Montauban (FR); KAISER, Clément, F-82000 Montauban (FR); BOURRIERES, Franck, F-82000 Montauban (FR)
(86) Numéro de dépôt international: PCT/FR2006/002564
(87) Numéro de publication internationale: WO 2007/060323

(56) Documents cités:
- WO-A-01/11591
- WO-A-02/33682
- GB-A- 2 304 077
- GB-A- 2 324 065
- US-A- 4 118 057
- US-A1- 2003 014 647

## Description

L'invention vise à proposer un scellé de très haute sécurité réutilisable sans limite sans aucune altération ou destruction de son mécanisme et permettant de prouver son ouverture. Ce type de scellé peut être utilisé : soit pour contrôler et prouver la non intrusion dans un lien ou un système ou la non atteinte à l'intégrité d'un objet ou de son contenu par une personne non autorisée, soit au contraire pour être ouvert par un agent afin de contrôler et prouver son passage.

### ETAT DE L'ART :

Un très grand nombre de procédés existent pour vérifier l'intrusion ou la tentative d'intrusion dans un système ou un lieu à protéger par des personnes non autorisées et pour identifier et authentifier des objets comme étant des originaux. Les moyens modernes les plus communs sont :
- des alarmes électroniques, ces systèmes déclenchent une alarme quand il y a intrusion par quiconque qui ne stoppe pas préalablement l'alarme à l'aide d'un code secret par exemple ou d'une empreinte biométrique autorisée.
- les systèmes de vidéosurveillance permettent d'enregistrer ou de contrôler en temps réel les lieux de passage ou d'accès,
- Les cartes (à puce, magnétique, ...), les codes secrets ou la biométrie, permettent de contrôler l'accès au lieu ou au système protégé.

Tous ces moyens sont adaptés aux contrôles d'accès et aux allers et venus d'êtres humains dans des lieux privés ou publics. En ce qui concerne la sécurisation des accès à des systèmes ou même l'interdiction générale d'accès dans un lieu ou dans un système sauf par une autorité assermentée, il est généralement fait usage de scellés dit de sécurité, permettant de condamner et d'interdire l'ouverture du système ou du lieu à protéger. Des scellés sont aussi utilisés pour garantir l'intégrité ou l'authenticité d'un objet. Ces scellés peuvent prendre différentes formes en fonction de l'application. La vérification de l'intégrité physique du scellé permet en principe d'assurer qu'il n'y a pas eu violation du système ou de l'objet. L'appellation système est prise au sens large, ce peut être par exemple un ensemble d'éléments associés entre eux ou un emballage ou un conditionnement quelconque tel qu'une bouteille avec par exemple la nécessité de préserver l'intégrité du contenu, de même il peut s'agir d'un système d'informations traitant des données sensibles. La présente invention vise plus particulièrement ces domaines d'application comme cela sera vu ci-après.

Le scellé le plus ancien est le cachet de cire, généralement marqué du sceau de l'Autorité. Il existe aussi des scellés métalliques ou en matière plastique intégrant un identificateur se présentant sous la forme de collier à serrage progressif. Ces scellés ne sont pas réutilisables car leur destruction est irrémédiable lorsqu'il y a violation du lieu ou du système à protéger. Il existe aussi les scellés métalliques sous forme de fil cannelé dit « perlé » et dont les deux extrémités sont serties dans un morceau de métal mou, généralement du plomb à l'aide d'une pince spéciale qui marque d'un sceau en relief ledit morceau de plomb, ceci est d'ailleurs généralement appelé un plombage. Ce dernier type de scellé est souvent utilisé sur des compteurs d'eau, de gaz, d'électricité, afin d'interdire l'accès au dispositif de comptage que celui-ci soit mécanique ou électronique. De même dans la grande famille des scellés nous pouvons ranger les plaques ou supports d'identification de toutes natures qui sont très souvent des plaques métalliques ou plastiques gravées ou frappées ou imprimées. Ces plaques ou supports identifient en général un objet, un système complexe ou une machine ou un individu au travers d'une carte d'identité, ce support étant marqué du sceau de l'Autorité qui l'a délivré et qui permet de l'authentifier. Les applications mettant en oeuvre des plaques ou supports d'identification sont nombreuses et variées, parmi les plus fréquentes on peut trouver : les véhicules automobiles qui possèdent à la fois la plaque d'identification du constructeur et les plaques d'immatriculation du ressort de l'administration ; les plaques d'identification et d'homologation de machines outils ; les plaques de matériels et de machines électriques et électroniques, etc....En général ces plaques d'identification sont répertoriées dans des fichiers ou des bases de données constructeur ou de l'administration.

Tous ces types de scellés ou supports d'identification présentent deux inconvénients majeurs : le premier c'est qu'ils sont très facilement reproductibles à l'identique avec des moyens sommaires y compris l'élément authentifiant ou sceau, il est d'ailleurs possible de se les procurer en grande quantité sur le marché ; le deuxième, c'est la substitution d'un objet ou d'un système à protéger. Pour certains d'entre eux, la liaison entre le scellé ou le support et les parties dont il faut interdire la séparation ou l'ouverture est inefficace et peut être facilement détruite en conservant intact le scellé ou le support. Il s'agit par exemple d'une fixation par collage qui pourra être dissoute par un produit chimique ou solvant approprié et qui va permettre de récupérer le scellé, d'accéder à la zone interdite et de repositionner le scellé au même endroit que précédemment et ainsi d'avoir accédé ou modifié des données sans que quiconque ne s'en aperçoive. Il devient aussi possible de substituer un scellé d'un produit original à une copie et ainsi de faire passer une copie pour un original.

Un autre problème majeur se situe au niveau du rapport coût/sécurité ou en général plus la sécurité est forte, plus le coût est élevé, ce qui pose un problème majeur pour les applications grandes consommatrices de scellés, mais où il faudrait simultanément un coût faible avec un niveau de sécurité élevé ce qui est en contradiction avec les solutions actuelles.

De même, pour interdire l'accès physique à des systèmes électroniques contenant des données confidentielles, il devient fréquent d'utiliser des hologrammes très spécifiques et même pour certains hautement sécurisés. Or, le qualificatif de hautement sécurisé était certainement plus approprié dans le passé qu'il ne l'est à l'heure actuelle car des moyens existent pour les reproduire à l'identique très facilement avec un niveau de qualité comparable à l'original. De plus les hologrammes ne sont pas individualisés, c'est-à-dire qu'ils sont tous identiques entre eux pour une même série et de ce fait, il devient facile pour une personne non autorisée de se procurer ces hologrammes, d'ouvrir le boîtier à protéger en détruisant l'hologramme et de le remplacer par un nouveau en touts points identique. Dans le cas où il n'est pas possible de se procurer l'hologramme, le contrefacteur peut toujours le décoller du boîtier sans le détruire et le remettre en place de la même façon. Ainsi d'une façon ou d'une autre, il devient extrêmement facile pour une personne déterminée de violer un système et d'accéder physiquement à des données confidentielles, par exemple dans un boîtier électronique contenant des mémoires de stockage ou de substituer un objet à un autre. De façon générale et quelle que soit la méthode utilisée, le scellé de sécurité doit d'une part empêcher la compromission d'accès physique du contenant vers le contenu et d'autre part de révéler cette compromission lorsque malgré tout celle-ci s'est produite. Un scellé de sécurité n'a pas vocation à rendre impossible les attaques contre un système ou l'accès à un lieu ou container quelconque, par contre s'il est bien conçu et bien intégré sur le produit ou le lieu à protéger, il dissuadera l'attaquant désireux de ne pas laisser de trace. Il s'agit avant tout d'un moyen de défense, lequel moyen est capable de mettre en évidence une tentative d'atteinte à l'intégrité physique du système ou de l'objet sur lequel il est monté. Selon les applications, le scellé dit de sécurité peut prendre plusieurs formes. Un scellé est en fait un moyen physique de réaliser une union authentifiable entre lui-même et un ou plusieurs éléments par une Autorité qui marquera le scellé de son sceau (sceau d'Etat par exemple).

Dans toutes ces applications, la problématique est précisément la possibilité de reproduire ces scellés à l'identique, avec pour conséquence la possibilité d'accéder frauduleusement au contenu physique du lieu ou du système à protéger

Le brevet FR2848698 du même demandeur et inventeur, concerne un procédé d'identification et d'authentification sans lecteur spécifique d'un objet ou d'un être vivant. Dans ce document, il est préconisé de rattacher un identificateur difficile ou impossible à reproduire à l'objet ou à l'être vivant à identifier ou à authentifier. Comme on peut le constater, ce document ne fait pas référence à un système de vérification de non intrusion dans un système ou un lieu à protéger ou de non atteinte à l'intégrité d'un objet ce qui est précisément l'objet de la présente invention. Le procédé décrit dans le document FR2848698 ne permet en aucun cas de garantir la non ouverture d'un système ou d'un lieu à protéger. En effet, le fait d'apposer un identificateur sur un objet n'empêche en rien d'avoir accès à l'objet, de le modifier, de l'analyser, et de replacer le même identificateur sans que cela soit visible même si celui-ci n'est pas reproductible. Dans le pire des cas, il est même envisageable de prélever l'authentificateur sans le détruire d'un objet et de l'apposer sur un autre objet.

Le document WO 01/11591 décrit un dispositif qui permet d'identifier des objets. Cet identificateur présente la particularité de comporter une matrice de lentilles qui génère un effet d'optique en trois dimensions, ce qui ne veut pas dire qu'il n'est pas reproductible. Ce qui est divulgué dans ce document diffère totalement de la présente invention essentiellement en ce que :
- à l'instar du brevet FR2848698, cet identificateur ne permet pas de garantir la mise en évidence de l'ouverture ou de l'intrusion de l'objet ou du lieu à protéger.
- l'identificateur décrit dans ce document est reproductible à l'infini puisqu'il repose sur un procédé de fabrication certes complexe mais tout à fait maîtrisé. Par conséquent l'unicité de cet identificateur n'est pas assurée.
- l'identificateur n'est pas associé à une base de données.

Le document EP1087334 décrit un système de scellé faisant appel à un transpondeur qui permet de contenir une identification électronique et interrogeable à distance. Ce type de transpondeur n'a rien d'unique puisqu'il est tout à fait possible pour une personne ou une organisation disposant de moyens de production d'en produire plusieurs ayant le même numéro. Par conséquent, il est tout à fait possible d'ouvrir le dispositif décrit d'accéder à son contenu et de reconstituer un ensemble de deux capsules identiques aux premières réponses avec un transpondeur donnant la même réponse que le premier. En fait, la faille de ce type de dispositif est dans toute la chaîne de fourniture des capsules et des transpondeurs, si une personne ou une organisation mal intentionnée peut détourner des pièces, elle sera en mesure de reconstituer le scellé identique au premier. De plus ce type de scellé n'est pas réutilisable en cas d'ouverture. Dans la présente invention comme cela sera vu ci-après, le procédé de non intrusion repose sur un authentificateur unique et non reproductible à l'identique et enregistré dans une base de données, par conséquent, même si une personne parvient à subtiliser des authentificateurs, ces derniers n'auront aucune utilité car ils ne seront pas enregistrés dans la base de données.

Le brevet WO02/33682A décrit un scellé réutilisable dont le passage de la position fermée à la position ouverte implique l'activation d'un générateur de code électronique aléatoire. La lecture de ce code sur un afficheur démontre que le scellé a été ouvert si le code a changé ou au contraire n'a pas été ouvert si le code n'a pas changé. Si les objectifs visés par ce brevet sont identiques à ceux de la présente invention, non seulement les moyens sont différents mais aussi les résultats en terme de sécurité sont bien plus élevés dans l'invention développée.

En effet la preuve de la non ouverture est apportée dans ce brevet par la lecture d'un affichage électronique, or un tel affichage peut être reproduit à l'identique à partir de la connaissance des algorithmes de génération des codes. De même en l'absence de cette connaissance des algorithmes de génération des codes, ce scellé réutilisable peut être substitué par un autre en tous points identique dont l'afficheur pourra faire apparaître un code identique à l'original mais dont la programmation aura été effectuée par un système électronique interne contrefait procurant des codes à la demande. Il est donc tout à fait impossible d'interchanger ce type de scellé par un autre aux caractéristiques authentifiantes en tous points identiques.

Le brevet US-A-4118057 décrit un scellé réutilisable dont la partie caractéristique authentifiante est fournie par l'agencement aléatoire des billes de différentes couleurs apparaissant dans une fenêtre. Le nombre extrêmement élevé de combinaisons permet d'affirmer qu'il est impossible de reproduire 2 combinaisons identiques et par conséquent de s'assurer de l'ouverture ou non du scellé. Le système est totalement mécanique, il n'y a pas d'électronique, la substitution d'un scellé par un autre scellé en tous points identique et fournissant le même arrangement de billes est théoriquement possible car les billes sont elles même parfaitement reproductibles en taille et en couleur. De ce fait, il suffit d'accéder à la fenêtre de visualisation et de positionner des billes de façon identiques. En ce sens, s'il peut paraître difficile de modifier le dispositif en cours d'utilisation, il est toujours facile de préparer un autre dispositif analogue dont on aura préparé à l'avance un arrangement identique de la partie authentifiante, c'est-à-dire le positionnement identique de billes de couleur.

Le brevet US2003/04647 décrit un authentifiant à bulles toujours unique et impossible à reproduire avec le moyen associé pour l'interpréter. Cet authentifiant à bulles bien qu'impossible à reproduire ne peut pas agir seul dans le cadre de la présente invention concernant un scellé réutilisable car il ne peut pas prouver qu'un scellé n'a pas été ouvert et refermé. Par contre comme cela sera vu dans la description de l'invention ci-après, ce type d'authentifiant est particulièrement bien adapté à la présente invention en tant qu'authentifiant individuel, associé à un autre authentifiant de même nature mais forcément différent dans ces caractéristiques, l'ensemble coopérant de façon chaotique pour procurer une infinité de positions nouvelles stables non reproductibles.

### DESCRIPTION DE L'INVENTION :

L'invention vise à apporter une solution globale à l'ensemble des trois problèmes qui se posent dans l'utilisation des scellés à savoir :
1) rendre les scellés non interchangeables entre eux
2) rendre physiquement solidaire le scellé du système ou du lieu ou de l'objet à protéger de façon à ce que s'il y a une intrusion ou simplement une tentative d'intrusion ou substitution, le scellé est lui-même marqué de façon visible,
3) rendre le scellé réutilisable après chaque utilisation afin d'en diminuer les coûts d'exploitation tout en conservant un très haut niveau de sécurité.
4) pouvoir contrôler sur place s'il y a eu ou non ouverture ou tentative d'ouverture.

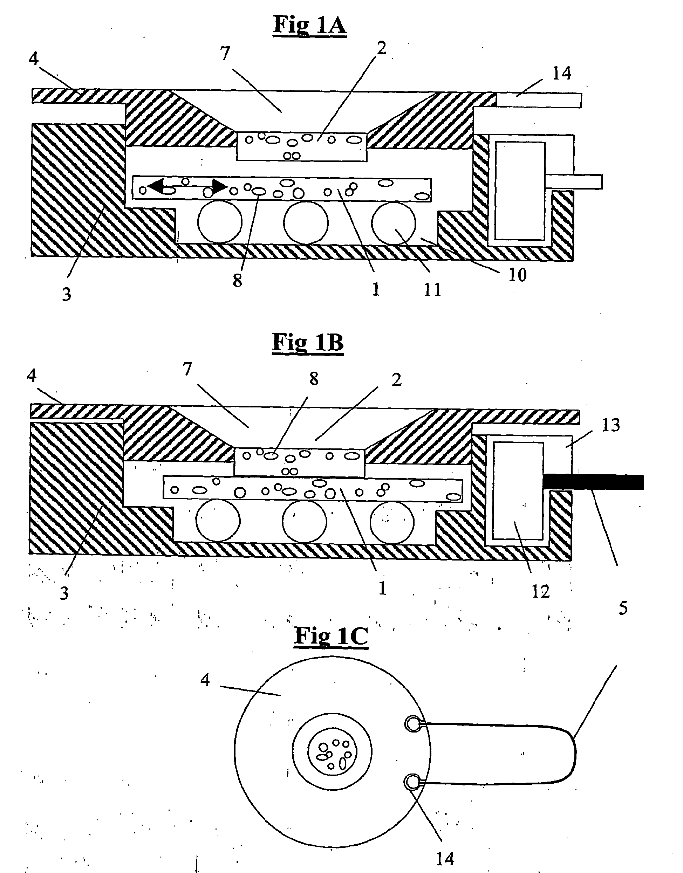

Le scellé de haute sécurité selon l'invention est défini par la revendication 1. Selon une première caractéristique particulièrement innovante et inventive, le scellé de haute sécurité selon l'invention est réutilisable de façon indéfinie dans le temps, tout en permettant de détecter et de prouver son ouverture et sa fermeture qui correspond à une nouvelle réutilisation. Sa particularité essentielle constituant le coeur de l'invention, réside dans le fait qu'il procure une nouvelle caractéristique authentifiante chaque fois qu'il est ouvert et par conséquent qu'il est refermé pour être de nouveau mis en service. Il se caractérise en ce qu'il intègre un dispositif permettant l'évolution non contrôlée de sa caractéristique authentifiante à chaque changement d'état c'est-à-dire lors du passage de la position fermée à ouverte (fig 1A) annulant la caractéristique authentifiante précédente et de la position ouverte à fermée (fig 1B) restituant une nouvelle caractéristique authentifiante grâce à l'autogénération chaotique de nouvelles caractéristiques authentifiantes provoquées par ledit changement d'état. Chaque caractéristique authentifiante est stockée dans une mémoire sécurisée ou base de données de référence afin de prouver s'il y a eu ouverture ou tentative d'ouverture dudit scellé.

Selon une autre caractéristique essentielle de l'invention, il est fait usage d'au moins deux authentificateurs 1, 2 présentant des caractéristiques toujours uniques et non reproductibles à l'identique afin d'éviter leurs duplications, les dits authentificateurs agissant séparément de façon instable pour au moins l'un d'entre eux lorsque le scellé est en position non bloquée (fig 1A) ou ouverte et agissant conjointement de façon stable et lisible lorsque le scellé est en position fermée et bloquée (fig 1B).

Selon une autre caractéristique essentielle de l'invention, l'action conjointe et stable des authentificateurs individuels 1, 2 non reproductibles permet de générer une nouvelle caractéristique authentifiante 15, 16, 17 totalement aléatoire dépendant de la position relative des dits authentifiants individuels 1, 2.

Selon une autre caractéristique essentielle de l'invention, l'action séparée et instable des authentifiants 1, 2 est générée par au moins un mouvement relatif d'un authentifiant par rapport à (aux) l'autre(s).

Selon encore une autre caractéristique essentielle de l'invention, le nouvel authentifiant commun 15, 16, 17 généré par la nouvelle position des authentifiants individuels 1, 2 permet de créer un nouveau code ou signature dont la représentation est stockée dans une base de données locale et/ou distante.

Selon une autre caractéristique, les caractéristiques authentifiantes uniques et non reproductibles des authentificateurs individuels 1, 2 sont issues d'un processus chaotique.

Selon une autre caractéristique de l'invention, les caractéristiques authentifiantes sont des bulles visibles autogénérées dans la matière.

A titre d'exemple ce processus chaotique peut être la formation de bulles lors du durcissement de la matière constituant ledit authentifiant. Ainsi, à l'inverse des dispositifs de l'art antérieur qui sont le résultat d'un processus de fabrication parfaitement maîtrisé par l'homme et donc reproductible par un autre homme disposant d'outils similaires, chaque authentificateur utilisé dans la présente invention est unique et impossible à reproduire par l'homme car il est le résultat d'un processus incontrôlé par ce dernier. Cette caractéristique permet de s'affranchir de façon définitive de l'impossibilité par quiconque de se procurer des authentificateurs ou des scellés identiques aux originaux. A la sécurité intrinsèque de chacun des authentificateurs, s'ajoute une deuxième sécurité qui est donnée par la somme ou plutôt la combinaison de l'action conjointe des authentificateurs.

Selon une autre caractéristique, à titre d'authentificateur physique individuel unique et non reproductible à l'identique c'est-à-dire impossible ou extrêmement difficile à cloner, il peut être utilisé un matériau transparent présentant des hétérogénéités dispersées de façon aléatoire dans le volume. Ces hétérogénéités pouvant être distinguées visuellement sont capturées par exemple sous forme de photographie et une ou plusieurs représentations caractérisant cette forme d'identificateur sont stockées dans une mémoire ou une base de données soit sous forme d'image à deux dimensions, soit sous forme numérique calculée à partir d'éléments remarquables, de positionnement, de dimension, etc. des hétérogénéités noyées dans le volume, les deux formes de représentation image et numérique pouvant cohabiter. De même il est possible d'intégrer à cette forme d'identification des particules magnétiques permettant de codifier d'une autre façon.

Selon une autre caractéristique et un mode préféré, il est utilisé des authentificateurs individuels transparents volumiques en verre, céramique, plastique ou polymère contenant des bulles visibles dont le nombre, la forme et la disposition sont issues d'une autogénération chaotique non contrôlable par l'homme. Ce type d'authentificateur est particulièrement intéressant car il est toujours unique et non clonable par l'homme. Le brevet EP01904039.3 du même déposant et des mêmes inventeurs suggère ce type d'authentifiant à bulles avec un système de lecture approprié. Dans le cas de la présente invention il s'agit d'utiliser cet authentifiant à bulles dans un procédé particulier dont la finalité ou le but est de bloquer ou d'interdire des accès à des systèmes ou à des lieux ou de vérifier l'intégrité ou l'identité avec des renseignements associés d'un objet original. De la même façon que précédemment, une représentation sous forme d'image et/ou numérique est stockée dans une base de données de façon à pouvoir vérifier l'intégrité de la caractéristique authentifiante.

Selon une autre caractéristique ne faisant pas partie de l'invention mais représentant des éléments de la technique qui sont utiles à la compréhension de l'invention, la mémoire et/ou la base de données dans laquelle est stockée une représentation de la caractéristique authentifiante, est située physiquement dans le système ou/et le lieu à protéger ou/et sur le support lui-même mais dont le contenu peut être lu de l'extérieur par une personne autorisée. Cette représentation de l'authentificateur constitue une clef d'accès au système physique et/ou d'informations logiques. De façon pratique et pour de nombreuses utilisations, le lecteur des caractéristiques authentifiables mémorise la lecture effectuée lors du dernier passage et la compare de façon automatique avec la nouvelle. En cas de discordance, un signal sonore ou lumineux avertit le contrôleur ce qui signifie qu'il y a eu ouverture. Sans sortir du cadre de la présente invention, à chaque scellé peut être associé un identifiant sous forme de code barre ou électronique (RFID) constituant ainsi une adresse dans la base de données de façon à effectuer plus facilement les comparaisons.

Selon une autre caractéristique ne faisant pas partie de l'invention mais représentant des éléments de la technique qui sont utiles à la compréhension de l'invention, la représentation de l'authentifiant sous forme d'image et/ou représentation numérique est consultable par un réseau de télécommunication type Internet.

Selon une autre caractéristique ne faisant pas partie de l'invention mais représentant des éléments de la technique qui sont utiles à la compréhension de l'invention, le contenu stocké sous forme numérique et/ou d'image peut être consulté par un contrôleur ou agent autorisé de plusieurs façons. Une première façon consiste à comparer visuellement la représentation sous forme d'image stockée dans la base de données locale et/ou distante avec l'authentifiant physique en analysant la similitude de positionnement des bulles ou des hétérogénéités. Plusieurs méthodes existent pour visualiser l'image : soit directement sur un écran intégré au système ou lieu à protéger, soit sur un écran dissocié ou annexe (téléphone mobile avec accès Internet), soit imprimé sur papier à partir d'une imprimante intégrée ou bien à partir d'une imprimante dissociée du système ou du lieu à protéger. Dans le cas où la base de données n'est pas locale mais distante, un code d'appel constituant l'identifiant de l'authentificateur dans la base de données distante est utilisé, le code d'appel peut être numérique, alphanumérique, code à barres, piste magnétique, puce électronique, etc.

Il est évident que la base de données locale ou distante est sécurisée ou protégée contre toute tentative de modification ou de remplacement par une autre information.

Selon une autre caractéristique ne faisant pas partie de l'invention mais représentant des éléments de la technique qui sont utiles à la compréhension de l'invention, le procédé de vérification de non intrusion dans un système ou un lieu à protéger ou de non atteinte à l'intégrité d'un objet selon l'invention est effectué par comparaison automatique de l'authentificateur, à l'aide d'un lecteur approprié, avec sa représentation numérique stockée dans une base de données locale ou distante.

Dans le cas d'un scellé réutilisable, selon la présente invention, la représentation authentifiante stockée dans une base de données évoluera à chaque nouvelle utilisation du scellé, c'est d'ailleurs cette correspondance entre ce qui est stocké dans la base de données et ce qui est réellement relevé sur le scellé qui permet d'attester que le scellé n'a pas été ouvert.

En figure 1, est représenté un dispositif selon un mode préféré de réalisation de l'invention, ceci ne constituant qu'un exemple non limitatif. La fig 1A montre le dispositif en position non bloquée. La figure 1B, montre le dispositif en position bloquée. La figure 1C est une vue de dessus du dispositif montrant la partie authentifiante. Un couvercle (4) comporte un authentifiant (2) transparent à bulles (8) générées chaotiquement. Cet authentifiant (2) est fixé sur le couvercle (4) comportant une fenêtre de visualisation (7). Le corps (3) comporte un authentifiant (1) transparent mais dont le fond est réflectorisant, par exemple argenté. De la même façon que dans l'authentifiant (2), les bulles (8) ont été générées chaotiquement. Dans le corps (3) est aménagé un lamage (10) dans lequel peuvent circuler librement des billes (11). Sur les billes (11) est placé l'authentifiant (1) qui peut se déplacer librement sur les billes dans les limites de son logement. L'attache (5) constitue le lien qui permet de lier le scellé de sécurité dans son ensemble à l'objet ou au container à protéger. Ce lien (5) est désolidarisable du scellé par l'intermédiaire du dispositif (12) placé de façon aveugle dans son logement (13). Pour enlever le lien (5) afin d'ouvrir le container ou d'atteindre le système protégé, il faut faire correspondre le passage (14) du couvercle (4) avec la partie correspondante du corps (3).

En figure 1A, le couvercle (4) est suffisamment dévissé du corps (3) pour que d'une part il soit possible d'enlever le lien (5) du corps (4) dans lequel il est prisonnier afin de faire correspondre l'ouverture (14) avec le logement (13) et d'autre part, de désolidariser les authentifiants (1) et (2). Lors de cette manoeuvre, l'authentifiant (1) totalement libre sur les billes (11) va se mouvoir et occuper une position aléatoire instable qui va changer en permanence à la moindre action exercée sur le système. Les authentifiants (1) et (2) sont inaccessibles de l'extérieur.

En figure 1B, le couvercle (4) est en position fermée et bloquée. Dans cette position, le lien (5) est totalement prisonnier du corps (3) fermé par le couvercle (4). Cette position permet aussi de bloquer par pression les authentifiants (1) et (2) et ainsi stabiliser l'authentifiant (1) qui était mobile lors de la position ouverte. Ainsi à cette position bloquée correspond nécessairement une nouvelle position relative et stable des authentifiants (1) et (2) qui est différente de la position stable précédente, ce qui permet de prouver que pour accéder à une nouvelle position relative stable des authentifiants il est nécessaire d'avoir débloqué le couvercle (4). Chaque position stable étant enregistrée dans une base de données grâce à la lecture de la position associée des bulles des deux authentifiants transparents, il devient aisé et facile de comparer toute nouvelle position relative de bulles et ainsi de prouver l'ouverture conduisant à ce changement.

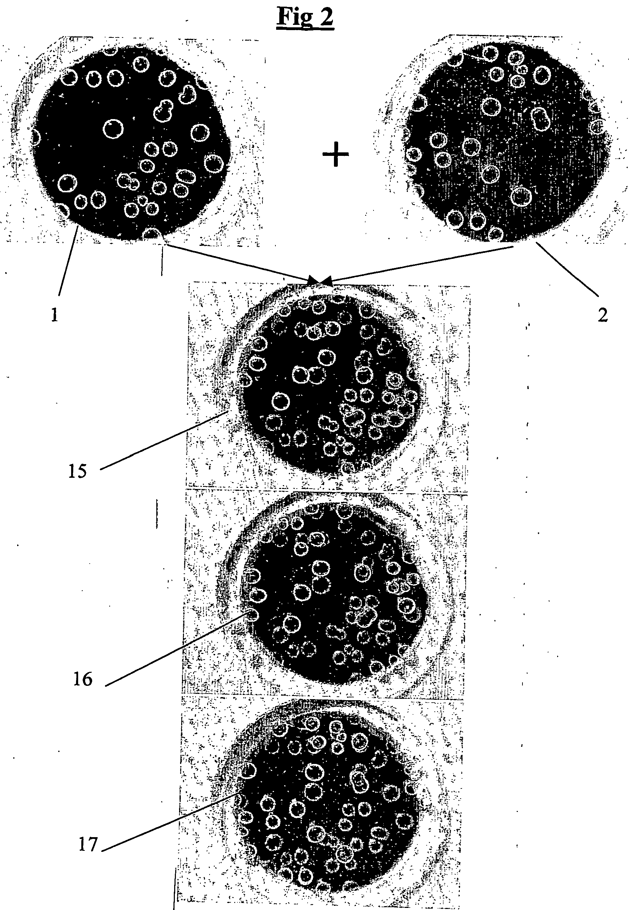

En figure 2 est représentée une photographie réalisée en application de la présente invention montrant la position de départ de chacun des authentifiants (1) et (2) puis successivement associés en (15), (16) et (17) après trois déblocages et reblocages, montrant ainsi les différentes combinaisons fournissant des signatures différentes.

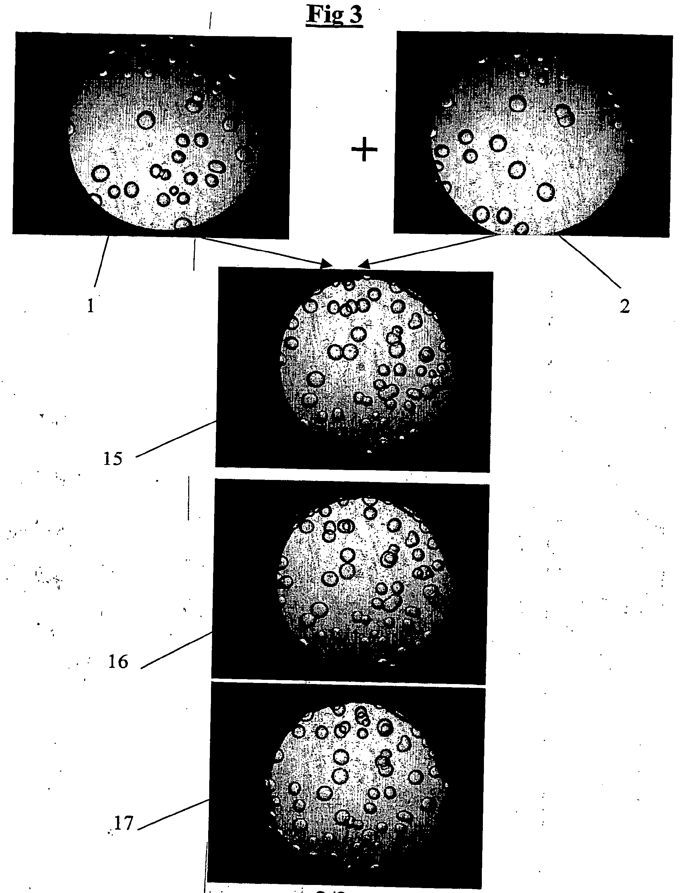

En figure 3 est représenté la même chose qu'en figure 2 excepté le fait que l'éclairage est différent, ce qui fait ressortir d'une autre façon les bulles associées.

Ce scellé de très haute sécurité et réutilisable selon l'invention va trouver sa place non seulement pour les applications exigeant un très haut niveau de sécurité, par exemple le transport de matières dangereuses, mais aussi pour les applications beaucoup plus banales où le niveau de sécurité demandé est certes moindre mais où l'investissement de départ pourra être amorti sur un très grand nombre d'utilisations, ce qui en fin de compte reviendra moins cher que les scellés jetables. Dans ce dernier cas et à titre d'exemple peuvent être cités les compteurs d'électricité, eau, gaz, etc.

De même ce type de scellé peut être utilisé pour effectuer du contrôle de passage par des agents dans des zones surveillées en renvoyant par exemple à l'aide d'un lecteur une nouvelle signature issue de l'ouverture du scellé à la base de données.

## Revendications

1. Scellé de haute sécurité réutilisable de façon indéfinie permettant de détecter et de prouver son ouverture et sa réutilisation, constitué d'un dispositif permettant une position non bloquée et une position bloquée procurant une caractéristique authentifiante (15), (16), (17) et une mémoire et/ou base de données sécurisée, **caractérisé en ce que** le passage de la position bloquée à non bloquée annule la caractéristique authentifiante précédente et le passage de la position non bloquée à bloquée restitue une nouvelle caractéristique authentifiante et que les caractéristiques authentifiantes (15), (16), (17) sont le résultat de l'action de deux authentificateurs (1), (2) uniques et non reproductibles à l'identique, lesdits authentificateurs agissant séparément de façon instable pour au moins l'un d'entre eux lorsque le scellé est en position non bloquée et agissant conjointement de façon stable lorsque le scellé est en position bloquée et que la représentation de chaque caractéristique authentifiante (15), (16), (17) est stockée dans ladite mémoire et/ou base de données de référence afin de prouver s'il y a eu ouverture ou tentative d'ouverture dudit scellé.

2. Scellé de haute sécurité réutilisable de façon indéfinie permettant de détecter et de prouver son ouverture et sa réutilisation, selon la revendication 1, **caractérisé en ce que** l'action conjointe et stable des authentificateurs individuels (1), (2) non reproductibles permet de générer un nouvel authentifiant commun (15), (16), (17) totalement aléatoire dépendant de la position relative des dits authentifiants individuels (1) et (2).

3. Scellé de haute sécurité réutilisable de façon indéfinie permettant de détecter et de prouver son ouverture et sa réutilisation, selon les revendications 1 et 2, **caractérisé en ce que** la nouvelle caractéristique authentifiante est générée par au moins un mouvement relatif d'un authentificateur par rapport à (aux) l'autre(s).

4. Scellé de haute sécurité réutilisable de façon indéfinie permettant de détecter et de prouver son ouverture et sa réutilisation, selon l'une quelconque des revendications 1 à 3 **caractérisé en ce que** le nouvel authentificateur commun généré par la nouvelle position des authentificateurs individuels (1), (2) permet de créer un nouveau code (15), (16), (17) ou signature dont la représentation est stockée dans une mémoire et/ou base de données locale ou distante.

5. Scellé de haute sécurité réutilisable de façon indéfinie permettant de détecter et de prouver son ouverture et sa réutilisation, selon les revendications 1 à 4, **caractérisé en ce que** les caractéristiques authentifiantes uniques et non reproductibles des authentificateurs individuels sont issues d'un processus chaotiques.

6. Scellé de haute sécurité réutilisable de façon indéfinie permettant de détecter et de prouver son ouverture et sa réutilisation, selon les revendications 1 à 5, **caractérisé en ce que** les caractéristiques authentifiantes sont des bulles visibles autogénérées dans la matière.

## Patentansprüche

1. Auf unbestimmte Weise wiederverwendbares Hochsicherheitssiegel, das das Erkennen und Nachweisen seiner Öffnung und seiner erneuten Verwendung ermöglicht, bestehend aus einer Vorrichtung, welche eine entsicherte und eine gesicherte Position erlaubt, die ein authentifizierendes Merkmal (15), (16), (17) verschafft, und einem Speicher und/oder- geschützten Datenbankspeicher , **dadurch gekennzeichnet, dass** der Wechsel von der gesicherten in die entsicherte Position das vorhergehende authentifizierende Merkmal aufhebt und der Wechsel von der entsicherten in die gesicherte Position ein erneutes authentifizierendes Merkmal wiederherstellt, und dass die authentifizierenden Merkmale (15), (16), (17) das Ergebnis der Aktion zweier eindeutiger und nicht identisch reproduzierbarer Authentifikatoren (1), (2) sind, wobei die genannten Authentifikatoren für zumindest einen von ihnen auf instabile Weise getrennt agieren, wenn das Siegel sich in entsicherter Position befindet, und auf stabile Weise gemeinsam agieren, wenn das Siegel sich in gesicherter Position befindet, und dass die Repräsentation jedes authentifizierenden Merkmals (15), (16), (17) in besagtem Speicher gespeichert und/oder Referenz-Datenbankspeicher gespeichert wird, um nachzuweisen, dass eine Öffnung oder ein Öffnungsversuch des genannten Siegels stattgefunden hat.

2. Auf unbestimmte Weise wiederverwendbares Hochsicherheitssiegel, das das Erkennen und Nachweisen seiner Öffnung und seiner erneuten Verwendung ermöglicht gemäß Anspruch I, **dadurch gekennzeichnet, dass** die gemeinsame und stabile Aktion der einzelnen nicht reproduzierbaren Authentifikatoren (I) (2) einen neuen gemeinsamen Authentifikator (15), (16), (17) vollkommen zufällig abhängig von der relativen Position der genannten einzelnen Authentifikatoren (1) und (2) erzeugen kann.

3. Auf unbestimmte Weise wiederverwendbares Hochsicherheitssiegel, das das Erkennen und Nachweisen seiner Öffnung und seiner erneuten Verwendung ermöglicht gemäß den Ansprüchen I und 2, **dadurch gekennzeichnet, dass** das neue authentifizierende Merkmal durch zumindest eine relative Bewegung eines Authentifikators in Bezug zum (zu den) anderen erzeugt wird.

4. Auf unbestimmte Weise wiederverwendbares Hochsicherheitssiegel, das das Erkennen und Nachweisen seiner Öffnung und seiner erneuten Verwendung ermöglicht gemäß einem der Ansprüche I bis 3, **dadurch gekennzeichnet, dass** der durch die neue Position der einzelnen Authentifikatoren (I), (2) erzeugte neue gemeinsame Authentifikator die Erzeugung eines neuen Codes (15), (16), (17) oder einer Signatur ermöglicht, dessen/deren Repräsentation in einem Speicher und/oder- in einem lokalen oder entfernten Datenbankspeicher gespeichert wird.

5. Auf unbestimmte Weise wiederverwendbares Hochsicherheitssiegel, das das Erkennen und Nachweisen seiner Öffnung und seiner erneuten Verwendung ermöglicht gemäß den Ansprüchen I bis 4, **dadurch gekennzeichnet, dass** die eindeutigen und nicht reproduzierbaren authentifizierenden Merkmale der einzelnen Authentifikatoren aus einem chaotischen Prozess hervorgehen.

6. Auf unbestimmte Weise wiederverwendbares Hochsicherheitssiegel, das das Erkennen und Nachweisen seiner Öffnung und seiner erneuten Verwendung ermöglicht gemäß den Ansprüchen I bis 5, **dadurch gekennzeichnet, dass** es sich bei den authentifizierenden Merkmalen um im Material selbsterzeugte sichtbare Blasen handelt.

## Claims

1. A high safety seal, re-usable in an undefined manner allowing to detect and prove it has been opened and re-used, comprising a device allowing an unblocked position and a blocked position providing an authenticating characteristic (15), (16), (17) and a secured data base and/or memory, **characterised in that** the transition from the blocked position to the unblocked position cancels the previous authenticating characteristic and the transition from the unblocked position to a blocked position restores a new authenticating characteristic and that the authenticating characteristics (15), (16), (17) result from the action of two unique authenticators (1), (2), which cannot be reproduced identically, the said authenticators acting separately in an unstable manner, for at least one of them, when the seal is in the unblocked position and acting jointly in a stable manner when the seal is in the blocked position and when the representation of each authenticating characteristic (15), (16), (17) is stored in the said reference memory and/or database in order to prove whether the said seal has been opened or attempted to be opened.

2. A high safety seal re-usable in an undefined manner allowing to detect and prove it has been opened and re-used, according to claim I, **characterised in that** the joint and stable action of the non-reproducible individual authenticators (1), (2) makes it possible to generate a totally random new common authenticator (15), (16), (17) depending on the relative position of the said individual authenticators (1) and (2).

3. A high safety seal re-usable in an undefined manner allowing to detect and prove it has been opened and re-used, according to claims 1 and 2, **characterised in that** the new authenticating characteristic is generated by at least a relative movement of one authenticator with respect to the other(s).

4. A high safety seal re-usable in an undefined manner allowing to detect and prove it has been opened and re-used, according to any one of claims 1 to 3, **characterised in that** the common authenticator generated by the new position of the individual authenticators (1), (2) makes it possible to create a new code (15), (16), (17) or signature whose representation is stored in a local or remote memory and/or database.

5. A high safety seal re-usable in an undefined manner allowing to detect and prove it has been opened and re-used, according to claims 1 to 4, **characterised in that** the unique and non-reproducible authenticating characteristics of the individual authenticators are the result from a chaotic process.

6. A high safety seal re-usable in an undefined manner allowing to detect and prove it has been opened and re-used, according to claims 1 to 5, **characterised in that** the authenticating characteristics are visible bubbles self-generated in the matter.
